# FASCICULE DE BREVET EUROPEEN

(11) **EP 3 344 474 B1**
(45) Date de publication et mention de la délivrance du brevet: **04.11.2020**
(21) Numéro de dépôt: 16759795.4
(22) Date de dépôt: 02.09.2016
(51) Int. Cl.: B60C 9/00, B60C 9/02, B60C 1/00

(54) **PNEUMATIQUE COMPORTANT DES CABLES D'ARMATURES DE CARCASSE PRESENTANT UN BAS TAUX DE CARBONE ET DES EPAISSEURS DE MELANGES CAOUTCHOUTEUX REDUITES**
LUFTREIFEN MIT KARKASSENVERSTÄRKUNGSFASERN MIT GERINGEM KOHLENSTOFFGEHALT UND KAUTSCHUKMISCHUNGEN MIT REDUZIERTER DICKE
PNEUMATIC TIRE COMPRISING LOW-CARBON CARCASS REINFORCING CORDS AND HAVING REDUCED THICKNESSES OF RUBBER MIXTURES

(30) Priorité: 04.09.2015 FR 1558200
(43) Date de publication de la demande: 11.07.2018
(73) Titulaire: Compagnie Générale des Etablissements Michelin, 63000 Clermont-Ferrand (FR)
(72) Inventeur: VERLEENE, Arnaud, 63040 Clermont-Ferrand Cedex 9 (FR); JOULIN, Emmanuel, 63040 Clermont-Ferrand Cedex 9 (FR)
(74) Mandataire: Le Cam, Stéphane Georges Elie
(86) Numéro de dépôt international: PCT/EP2016/070703
(87) Numéro de publication internationale: WO 2017/037225

(56) Documents cités:
- WO-A1-2011/061082
- FR-A1- 2 950 838
- FR-A1- 3 014 020
- FR-A1- 3 014 021

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter la dimension du passage des agents oxydants.

Il est encore connu pour limiter la dimension du passage des agents oxydants de réaliser des câbles à couches dont les couches internes sont gainées d'une couche d'élastomères durant leur fabrication de sorte que la migration des agents oxydants soient rendue quasi-impossible le long des éléments de renforcement de l'armature de carcasse. De tels câbles sont par exemple décrits dans le brevet EP-B-1699973.

Le document WO 2011/061082 A1 propose de conserver au moins 70% des câbles fortement pénétrés par un mélange caoutchouteux et d'en avoir une partie non pénétrée pour autoriser l'air emprisonné à s'évacuer au sein de ces câbles sous l'effet de la pression de cuisson et autoriser les différents semi finis à venir au contact les uns des autres lors de la cuisson.

Le document FR 3 014 021 A1 décrit des câbles à couches d'armature de carcasse dont les couches internes sont gainées d'une couche d'élastomères durant leur fabrication associés à une réduction locale de l'épaisseur des mélanges élastomériques formant les couches internes du pneumatique.

Les inventeurs ont su mettre en évidence que si ces solutions sont favorables aux éléments de renforcement pour lutter contre les phénomènes de "fatigue-fretting-corrosion", il s'avère que lors de roulages dans des conditions particulièrement sévères, en termes de charge ou pression, les mélanges élastomériques constitutifs du pneumatique s'oxydent prématurément de manière très locale et/ou les éléments de renforcement de l'armature de carcasse s'oxydent prématurément de manière très locale.

Les inventeurs se sont ainsi donnés pour mission de fournir des pneumatiques pour véhicules lourds de type "Poids-Lourds", dont les performances d'endurance des éléments de renforcement de l'armature de carcasse restent satisfaisants notamment au regard des phénomènes de "fatigue-corrosion" ou de "fatigue-fretting-corrosion", dont les performances d'endurance des mélanges élastomériques sont améliorées, quelles que soient les conditions de roulage et dont le coût de fabrication reste acceptable.

Ce but a été atteint selon l'invention par un pneumatique à armature de carcasse radiale, constituée d'au moins une couche d'éléments de renforcement métalliques, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles constitués de plusieurs fils d'acier présentant un taux de carbone en masse C tel que 0.01 % ≤ C < 0.4 %, lesdits câbles d'au moins une couche de l' armature de carcasse présentant au test dit de perméabilité un débit strictement supérieur à 20 cm³/mn et l'épaisseur de mélange caoutchouteux entre la surface intérieure de la cavité du pneumatique et le point d'un élément de renforcement métallique de l'armature de carcasse le plus proche de la dite surface intérieure de la cavité étant inférieure ou égale à 3.2 mm.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

L'épaisseur de mélange caoutchouteux entre la surface intérieure de la cavité du pneumatique et le point d'un élément de renforcement le plus proche de la dite surface est égale à la longueur de la projection orthogonale de l'extrémité du point d'un élément de renforcement le plus proche de la dite surface sur la surface intérieure de la cavité du pneumatique.

Les mesures d'épaisseur de mélange caoutchouteux sont effectuées sur une coupe transversale d'un pneumatique, le pneumatique étant donc dans un état non gonflé.

Selon un mode de réalisation préféré de l'invention, le mélange caoutchouteux entre la cavité du pneumatique et les éléments de renforcement de la couche d'armature de carcasse radialement la plus à l'intérieure étant constitué d'au moins deux couches de mélange caoutchouteux, la couche de mélange caoutchouteux radialement la plus à l'intérieur présente une épaisseur inférieure ou égale à 1.5 mm. Comme expliqué précédemment, cette couche est habituellement pour partie composée de butyle de façon à augmenter l'étanchéité du pneumatique et ce type de matériau présentant un coût non négligeable, la diminution de cette couche est favorable.

De préférence encore selon l'invention, la couche de mélange caoutchouteux radialement adjacente à la couche de mélange caoutchouteux radialement la plus à l'intérieur présente une épaisseur inférieure ou égale à 1.7 mm. L'épaisseur de cette couche dont les constituants permettent notamment de fixer l'oxygène de l'air peut également être réduite de façon à diminuer encore le coût du pneumatique.

Les épaisseurs de chacune de ces deux couches sont égales à la longueur de la projection orthogonale d'un point d'une surface sur l'autre surface de ladite couche.

Les inventeurs ont su mettre en évidence qu'un pneumatique ainsi réalisé selon l'invention conduit à des améliorations en termes de compromis endurance coûts de fabrication très intéressants. En effet, les propriétés d'endurance avec un tel pneumatique sont au moins aussi bonnes qu'avec les meilleures solutions évoquées ci-dessus voire améliorées en ce qui concerne les performances d'endurance plus spécifiquement liées aux mélanges élastomériques que ce soit dans des conditions de roulage normales ou bien dans des conditions de roulage particulièrement sévères. Par ailleurs, l'épaisseur de la couche de mélange caoutchouteux entre l'armature de carcasse et la cavité du pneumatique étant réduite par rapport à des pneumatiques usuelles et celle-ci constituant un des composants les plus onéreux du pneumatique, le coût de fabrication du pneumatique est inférieur à celui d'un pneumatique usuel. Les câbles de l'armature de carcasse étant constitués de plusieurs fils d'acier présentant un taux de carbone en masse C tel que 0.01 % ≤ C < 0.4 % permettent de limiter les risques liés à la corrosion du fait des phénomènes de "fatigue-corrosion" ou de "fatigue-fretting-corrosion" que subissent lesdits câbles de l'armature de carcasse, et les problèmes d'oxydation locale et prématurée de certains mélanges élastomériques constitutifs du pneumatique qui pouvaient apparaître dans des conditions de roulage particulièrement sévères sont inexistants ou très retardés.

En effet, les inventeurs ont su mettre en évidence que les solutions du type câbles fortement pénétrés ou câbles comportant un mélange élastomérique déposé lors de la fabrication dudit câble au niveau des couches internes, conduisent à une répartition de la pression d'air au sein des mélanges non homogène ; sur une coupe méridienne, la répartition de la pression au niveau de l'armature carcasse varie effectivement le long de celle-ci. Les inventeurs pensent interpréter cette inhomogénéité du fait de la non circulation d'air au sein des câbles et donc uniquement du fait de la présence d'air lié au passage au travers des mélanges. La pression résiduelle au niveau de la carcasse doit donc dépendre essentiellement des épaisseurs de mélange à traverser depuis la cavité et de la réactivité desdits mélanges vis-à-vis de l'oxygène. Ces épaisseurs pouvant varier le long de la carcasse selon une coupe méridienne soit du fait de la conception même du pneumatique soit du fait de déformations des mélanges lors de la fabrication et notamment lors de la conformation du pneumatique, elles peuvent expliquer ces variations de pression. Les zones soumises à des pressions plus élevées peuvent alors conduire à une oxydation et donc un vieillissement prématuré des mélanges constituant le pneumatique. Les câbles selon l'invention présentant au test dit de perméabilité un débit strictement supérieur à 20 cm³/mn, ces phénomènes d'inhomogénéité de pression et donc de pressions locales pouvant être élevées et risquer de provoquer un vieillissement prématuré des mélanges constituant le pneumatique n'existent plus.

De préférence selon l'invention, lesdits fils d'acier présentent une contrainte maximale avant rupture R, exprimée en MPa, telle que R ≥ 175 + 930.C - 600.ln(d) et R ≥ 1500 MPa, d étant le diamètre desdits fils d'acier.

La contrainte maximale à la rupture ou limite de rupture correspond à la force nécessaire pour faire rompre le fil. Les mesures de contrainte maximale avant rupture notée R (en MPa) sont effectuées selon la norme ISO 6892 de 1984.

Même si la contrainte maximale avant rupture peut être dans certains cas inférieure à celle de fils de l'état de la technique présentant un taux de carbone en masse C plus élevé, le fil selon l'invention est beaucoup moins sensible à la fatigue et à la corrosion ce qui améliore l'endurance du pneumatique et compense son éventuel déficit initial en contrainte maximale avant rupture.

De plus, le taux de carbone en masse C étant relativement faible, on améliore la tréfilabilité du fil, c'est-à-dire la possibilité d'écrouir suffisamment le fil par tréfilage pour lui conférer des propriétés de résistance mécaniques importantes et notamment une contrainte maximale avant rupture satisfaisante. Il peut ainsi être possible de réduire le diamètre du fil, et donc alléger le pneumatique, tout en conservant une résistance mécanique suffisante pour renforcer le pneumatique.

De préférence encore selon l'invention, lesdits fils d'acier présentent un taux de chrome en masse Cr tel que Cr < 12 %.

L'utilisation d'un faible taux de chrome Cr permet d'obtenir un fil présentant des avantages en termes de contraintes liées à l'environnement. En effet, l'utilisation de chrome nécessite l'emploi de mesures spécifiques coûteuses, notamment lors du recyclage des tels fils, ce qui peut être évité grâce au fil selon l'invention.

Avantageusement selon l'invention, la micro-structure de l'acier est intégralement de la ferrite, de la perlite ou un mélange de ces microstructures.

Ainsi, la micro-structure de l'acier est dépourvue de martensite et/ou de bainite. Une microstructure ferrito-martensitique entraine des décohésion entre les phases ferritique et martensitique ce qui n'est pas souhaitable. Une microstucture martensitique n'est pas suffisamment ductile pour permettre un tréfilage du fil qui casserait trop fréquemment.

On distingue une micro-structure ferritique, perlitique ou ferrito-perlitique d'une autre micro-structure, en particulier martensitique ou bainitique par observation métallo graphique. La micro-structure ferrito-perlitique présente des grains de ferrite ainsi que des zones perlitiques lamellaires. Au contraire, la micro-structure martensitique comprend des lattes et/ou des aiguilles que l'homme du métier saura distinguer des grains et des lamelles des micro-structures ferrito-perlitique et perlitique.

Plus préférentiellement selon l'invention, la microstructure de l'acier est intégralement ferrito-perlitique.

Lesdits fils selon l'invention sont en acier, c'est-à dire qu'ils sont constitués majoritairement (c'est-à-dire pour plus de 50% en masse) ou intégralement (pour 100% en masse) d'acier tel que défini dans la norme NF EN 10020. Conformément à cette norme, un acier est un matériau contenant plus de fer que tout autre élément et dont la teneur en carbone est inférieure à 2% et qui contient d'autres éléments d'alliages. Toujours conformément à cette norme, l'acier comprend éventuellement d'autres éléments d'alliages.

De préférence, l'acier est un acier non allié tel que défini dans la norme NF EN10020. Ainsi, l'acier comprend, en plus du carbone et du fer, d'autres éléments alliages connus dans des quantités conformes à la norme NF EN10020.

Dans un autre mode de réalisation, l'acier est un acier allié tel que défini dans la norme NF EN10020. Dans ce mode de réalisation, l'acier comprend, en plus du carbone et du fer, d'autres éléments alliages connus.

De préférence, l'acier n'est pas un acier inoxydable tel que défini dans la norme NF EN10020. Ainsi, dans ce mode de réalisation, l'acier comprend préférentiellement au plus 10,5% en masse de chrome.

Avantageusement, le fil présente un taux de carbone en masse C tel que 0,07 % ≤ C ≤ 0,3 %, de préférence 0,1 % ≤ C ≤ 0,3 % et plus préférentiellement 0,15 % ≤ C ≤ 0,25 %.

Avantageusement, R ≥ 350 + 930.C - 600.ln(d), de préférence R ≥ 500 + 930.C - 600.ln(d), plus préférentiellement R ≥ 700 + 930.C - 600.ln(d).

Avantageusement, d est supérieur ou égal à 0,10 mm et de préférence à 0,12 mm.

Lorsque le diamètre d est trop petit, le coût de revient industriel du fil devient trop important et incompatible avec une production de masse.

Dans certains modes de réalisation, d > 0,15 mm et R ≥ 1800 MPa et de préférence d > 0,15 mm et R ≥ 1900 MPa.

Avantageusement, d est inférieur ou égal à 0,40 mm, de préférence à 0,25 mm, plus préférentiellement à 0,23 mm et encore plus préférentiellement à 0,20 mm.

Lorsque le diamètre d est trop grand, la flexibilité et l'endurance du fil sont trop faibles pour une utilisation du fil dans certaines nappes du pneumatique, notamment l'armature de carcasse, par exemple pour véhicule de type poids lourd.

Dans certains modes de réalisation, d ≤ 0,15 mm et R ≥ 2000 MPa et de préférence d ≤ 0,15 mm et R ≥ 2100 MPa.

Selon un mode de réalisation de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

De préférence, le diamètre des fils de la première couche de la couche interne (C1) est compris entre 0.10 et 0.4 mm et le diamètre des fils des couches externes (C2, C3) est compris entre 0.10 et 0.4 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Dans la construction L+M+N selon l'invention, la couche intermédiaire C2 comporte de préférence six ou sept fils, et le câble conforme à l'invention présente alors les caractéristiques préférentielles suivantes (d₁, d₂, d₃, p₂ et p₃ en mm) :
- (i) 0,10 < d₁ < 0,28 ;
- (ii) 0,10 < d₂ < 0,25 ;
- (iii) 0,10 < d₃ < 0,25 ;
- (iv) M = 6 ou M = 7 ;
- (v) 5 π (d₁ + d₂) ≤ p₂ ≤ p₃ < 5 π (d₁ + 2d₂ + d₃) ;
- (vi) les fils desdites couches C2, C3 sont enroulés dans le même sens de torsion (S/S ou Z/Z).

De préférence, la caractéristique (v) est telle que p₂ = p₃, de telle sorte que le câble est dit compact compte tenu par ailleurs de la caractéristique (vi) (fils des couches C2 et C3 enroulés dans le même sens).

Selon la caractéristique (vi), tous les fils des couches C2 et C3 sont enroulés dans le même sens de torsion, c'est-à-dire soit dans la direction S (disposition "S/S"), soit dans la direction Z (disposition "Z/Z"). L'enroulement dans le même sens des couches C2 et C3 permet avantageusement, dans le câble conforme à l'invention, de minimiser les frottements entre ces deux couches C2 et C3 et donc l'usure des fils qui les constituent (puisqu'il n'y a plus de contact croisé entre les fils).

De préférence, le câble de l'invention est un câble à couches de construction notée 1+M+N, c'est-à-dire que sa couche interne C1 est constituée d'un seul fil.

Les fils des couches C2 et C3 peuvent avoir un diamètre identique ou différent d'une couche à l'autre. On utilise de préférence des fils de même diamètre (d₂=d₃), notamment pour simplifier le procédé de câblage et abaisser les coûts.

L'invention est de préférence mise en œuvre avec un câble choisi parmi les câbles de structure 3+9, 1+4+8, 1+4+9, 1+4+10, 1+5+9, 1+5+10, 1+5+11,1+6+10, 1+6+11, 1+6+12, 1+7+11, 1+7+12 ou 1+7+13.

Selon une variante de réalisation de l'invention, l'armature de sommet du pneumatique est formée d'au moins deux couches de sommet de travail d'éléments de renforcement de préférence inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 2 qui représentent :
- figure 1, une vue méridienne d'un schéma d'un pneumatique selon un mode de réalisation de l'invention,
- figure2, une vue partielle agrandie d'une partie du schéma de la figure 1.

Les figures ne sont pas représentées à l'échelle pour en simplifier la compréhension.

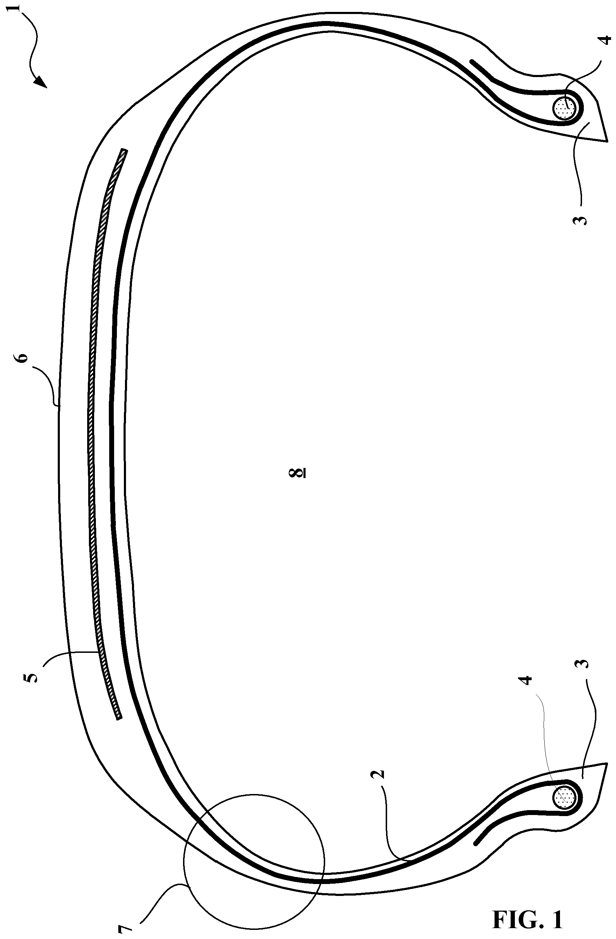

Sur la figure 1, le pneumatique 1, de dimension 295/80 R 22.5, comprend une armature de carcasse radiale 2 ancrée dans deux bourrelets 3, autour de tringles 4. L'armature de carcasse 2 est formée d'une seule couche de câbles métalliques 11 et de deux couches de calandrage 13. L'armature de carcasse 2 est frettée par une armature de sommet 5, elle-même coiffée d'une bande de roulement 6. L'armature de sommet 5 est formée radialement de l'intérieur à l'extérieur :
- d'une couche de triangulation formée de câbles métalliques inextensibles 9.28 non frettés, orientés d'un angle égal à 65°,
- d'une première couche de travail formée de câbles métalliques inextensibles 11.35 non frettés, continus sur toute la largeur de la nappe, orientés d'un angle égal à 26°,
- d'une seconde couche de travail formée de câbles métalliques inextensibles 11.35 non frettés, continus sur toute la largeur de la nappe, orientés d'un angle égal à 18° et croisés avec les câbles métalliques de la première couche de travail,
- d'une couche de protection formée de câbles métalliques élastiques 6.35 non frettés, continus sur toute la largeur de la nappe, orientés d'un angle égal à 18° dans le même sens que les câbles métalliques de la seconde couche de travail.

L'ensemble de ces couches constituant l'armature de sommet 5 n'est pas représenté en détail sur les figures.

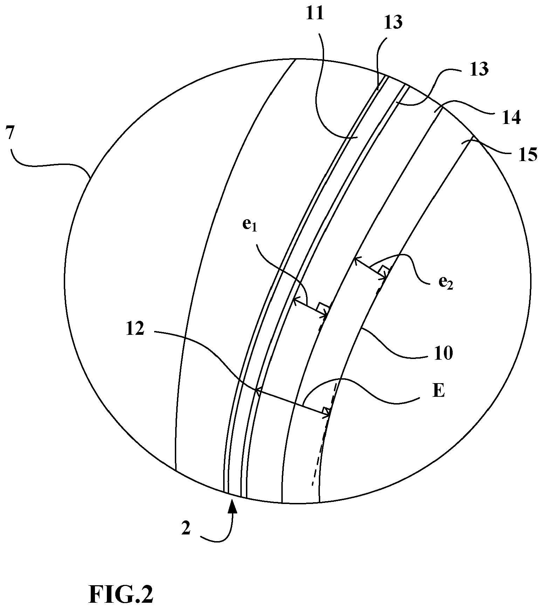

La figure 2 illustre un agrandissement de la zone 7 de la figure 1 et indique notamment l'épaisseur E de mélange caoutchouteux entre la surface intérieure 10 de la cavité 8 du pneumatique et le point 12 d'un élément de renforcement 11 le plus proche de ladite surface 10. Cette épaisseur E est égale à la longueur de la projection orthogonale du point 12 d'un élément de renforcement 11 le plus proche de ladite surface 10 sur la surface 10. Cette épaisseur E est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, des épaisseurs e₁, e₂ des différentes couches 14, 15 de mélange caoutchouteux formant la paroi interne du pneumatique 1. Ces épaisseurs e₁, e₂ sont par ailleurs égales à la longueur de la projection orthogonale d'un point d'une surface sur l'autre surface de la couche concernée respectivement 14 ou 15.

Ces mesures d'épaisseur sont effectuées sur une coupe transversale du pneumatique, celui-ci étant par conséquent non monté et non gonflé.

La valeur de E mesurée est égale à 2.4 mm.

Les valeurs de e₁ et e₂ sont respectivement égales à 1.4 mm et 1 mm.

Les câbles d'armature de carcasse du pneumatique 1 sont des câbles à couche de structure 1+6+12, non fretté, constitué d'un noyau central formé d'un fil, d'une couche intermédiaire formée de six fils et d'une couche externe formée de douze fils.

Il présente les caractéristiques suivantes (d et p en mm) :
- structure 1+6+12 ;
- d₁ = 0.20 (mm);
- d₂ = 0.18 (mm);
- p₂ = 10 (mm)
- d₃ = 0.18 (mm);
- p₂ = 10 (mm),
- (d₂ / d₃) = 1 ;
avec d₂, p₂, respectivement le diamètre et le pas d'hélice de la couche intermédiaire et d₃ et p₃, respectivement le diamètre et le pas de d'hélice des fils de la couche externe.

Les fils d'acier constituant les câbles d'armature de carcasse présentent un taux de carbone en masse C égal à 0.21%.

La contrainte maximale avant rupture des fils d'acier constituant les câbles d'armature de carcasse est égale à 2750 MPa.

Au test dit de perméabilité, les câbles extraits du pneumatique présentent un débit égal à 22 cm³/mn et donc supérieur à 20 cm³/mn.

Des essais ont été réalisés avec des pneumatiques P réalisés selon l'invention conformément à la représentation des figures 1 et 2, et d'autres avec des pneumatiques R dits de référence.

Ces pneumatiques de référence R diffèrent des pneumatiques P selon l'invention par des câbles de l'armature de carcasse comportant une couche de gainage autour des couches internes et les fils d'acier constituant les câbles d'armature de carcasse présentant un taux de carbone en masse C égal à 0.58 % et une contrainte maximale avant rupture égale à 2830 MPa.

L'âme du câble du pneumatique de référence constitué du noyau central formé d'un fil et de la couche intermédiaire formée des six fils est gainée par une composition de caoutchouc à base d'élastomère diénique non vulcanisé (à l'état cru). Le gainage est obtenu via une tête d'extrusion de l'âme constituée du fil entouré des six fils, suivi d'une opération finale de retordage ou câblage des 12 fils autour de l'âme ainsi gainé.

Des essais d'endurance en roulage sur volant extérieur de circonférence égale à 8.5 mètres ont été réalisés en imposant aux pneumatiques une charge de 4176 daN et une vitesse de 40 km/h, avec un gonflage des pneumatiques dopé en oxygène à 10.2 bars. Ces essais sont réalisés dans une enceinte climatisée à 15°C. Les essais ont été réalisés pour les pneumatiques selon l'invention avec des conditions identiques à celles appliquées aux pneumatiques de référence. Les roulages sont arrêtés dès que les pneumatiques présentent des dégradations de l'armature de carcasse.

Le kilométrage parcouru est mesuré jusqu'à ce que le pneumatique présente une dégradation. Les mesures illustrées ci-dessous sont ramenées à une base 100 pour le pneumatique de référence.

| | R | P |
|---|---|---|
| Km | 100 | 125 |

Ces résultats montrent que dans des conditions de roulage particulièrement sévères, les pneumatiques selon l'invention sont plus performants en termes d'endurance que les pneumatiques de référence. Les défaillances de ces derniers sont dues à une oxydation localisée de mélanges élastomériques au niveau de l'armature de carcasse. De tels défauts n'apparaissent dans les pneumatiques selon l'invention qu'à des kilométrages plus élevés. Par ailleurs, il apparait que l'utilisation des câbles dont les fils d'acier sont à bas taux de carbone permet de repousser les risques liés aux phénomènes de "fatigue-corrosion" ou de "fatigue-fretting-corrosion" à un niveau au moins aussi bon que des câbles fortement pénétrés ou des câbles comportant un mélange élastomérique déposé lors de la fabrication desdits câbles au niveau des couches internes.

## Revendications

1. Pneumatique (1) à armature de carcasse radiale (2), constituée d'au moins une couche d'éléments de renforcement métalliques, ledit pneumatique comprenant une armature de sommet (5), elle-même coiffée radialement d'une bande de roulement (6), ladite bande de roulement étant réunie à deux bourrelets (3) par l'intermédiaire de deux flancs, les éléments de renforcement métalliques (11) d'au moins une couche de l'armature de carcasse étant des câbles constitués de plusieurs fils d'acier présentant un taux de carbone en masse C tel que 0.01 % ≤ C < 0.4 %, l'épaisseur (E) de mélange caoutchouteux entre la surface intérieure (10) de la cavité (8) du pneumatique et le point (12) d'un élément de renforcement métallique (11) de l'armature de carcasse le plus proche de la dite surface intérieure de la cavité étant inférieure ou égale à 3.2 mm, **caractérisé en ce que** lesdits câbles d'au moins une couche de l'armature de carcasse présentent au test dit de perméabilité, décrit dans la norme ASTM D2692-98, un débit strictement supérieur à 20 cm³/mn.

2. Pneumatique (1) selon la revendication 1, le mélange caoutchouteux entre la cavité (8) du pneumatique et les éléments de renforcement (11) de la couche d'armature de carcasse (2) radialement la plus à l'intérieure étant constitué d'au moins deux couches de mélange caoutchouteux (14, 15), **caractérisé en ce que** la couche de mélange caoutchouteux (15) radialement la plus à l'intérieur présente une épaisseur (e₂) inférieure ou égale à 1.5 mm.

3. Pneumatique (1) selon l'une des revendications 1 ou 2, le mélange caoutchouteux entre la cavité (8) du pneumatique et les éléments de renforcement (11) de la couche d'armature de carcasse (2) radialement la plus à l'intérieure étant constitué d'au moins deux couches de mélange caoutchouteux (14, 15), **caractérisé en ce que** la couche de mélange caoutchouteux (14) radialement adjacente à la couche de mélange caoutchouteux (15) radialement la plus à l'intérieur présente une épaisseur (e₁) inférieure ou égale à 1.7 mm.

4. Pneumatique (1) selon l'une des revendications précédentes, **caractérisé en ce que** lesdits fils d'acier présentent une contrainte maximale avant rupture R, exprimée en MPa et mesurée selon la norme ISO 6892 de 1984, telle que R ≥ 175 + 930.C - 600.ln(d) et R ≥ 1500 MPa, d étant le diamètre desdits fils d'acier.

5. Pneumatique (1) selon l'une des revendications précédentes, **caractérisé en ce que** lesdits fils d'acier présentent un taux de chrome en masse Cr tel que Cr < 12 %.

6. Pneumatique (1) selon l'une des revendications précédentes, **caractérisé en ce que** les éléments de renforcement métalliques (11) d'au moins une couche de l'armature de carcasse (2) sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

7. Pneumatique (1) selon la revendication 6, **caractérisé en ce que** le diamètre des fils de la première couche (C1) est compris entre 0.10 et 0.4 mm, et **en ce que** le diamètre des fils des couches (C2, C3) est compris entre 0.10 et 0.4 mm.

8. Pneumatique (1) selon l'une des revendications précédentes, **caractérisé en ce que** l'armature de sommet (5) est formée d'au moins deux couches de sommet de travail d'éléments de renforcement, croisés d'une couche à l'autre en faisant avec la direction circonférentielle des angles compris entre 10° et 45°.

9. Pneumatique (1) selon l'une des revendications précédentes, **caractérisé en ce que** l'armature de sommet (5) comporte encore au moins une couche d'éléments de renforcement circonférentiels.

10. Pneumatique (1) selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

11. Pneumatique (1) selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Patentansprüche

1. Reifen (1) mit radialer Karkassenbewehrung (2), welche aus wenigstens einer Schicht metallischer Verstärkungselemente besteht, wobei der Reifen eine Scheitelbewehrung (5) umfasst, die ihrerseits radial von einem Laufstreifen (6) bedeckt wird, wobei der Laufstreifen über zwei Seitenwände mit zwei Wülsten (3) verbunden ist, wobei die metallischen Verstärkungselemente (11) wenigstens einer Schicht der Karkassenbewehrung Seile sind, die aus mehreren Stahldrähten bestehen, die einen solchen Massenanteil von Kohlenstoff C aufweisen, dass 0,01 % ≤ C < 0,4 % ist, wobei die Dicke (E) der Kautschukmischung zwischen der Innenfläche (10) des Hohlraums (8) des Reifens und dem Punkt (12) eines metallischen Verstärkungselements (11) der Karkassenbewehrung, welcher der Innenfläche des Hohlraums am nächsten ist, kleiner oder gleich 3,2 mm ist, **dadurch gekennzeichnet, dass** die Seile wenigstens einer Schicht der Karkassenbewehrung bei dem sogenannten Durchlässigkeitstest, der in der Norm ASTM D2692-98 beschrieben ist, einen Durchsatz aufweisen, der streng größer als 20 cm³/min ist.

2. Reifen (1) nach Anspruch 1, wobei die Kautschukmischung zwischen dem Hohlraum (8) des Reifens und den Verstärkungselementen (11) der radial innersten Schicht der Karkassenbewehrung (2) aus wenigstens zwei Schichten Kautschukmischung (14, 15) besteht, **dadurch gekennzeichnet, dass** die radial innerste Schicht Kautschukmischung (15) eine Dicke (e₂) aufweist, die kleiner oder gleich 1,5 mm ist.

3. Reifen (1) nach einem der Ansprüche 1 oder 2, wobei die Kautschukmischung zwischen dem Hohlraum (8) des Reifens und den Verstärkungselementen (11) der radial innersten Schicht der Karkassenbewehrung (2) aus wenigstens zwei Schichten Kautschukmischung (14, 15) besteht, **dadurch gekennzeichnet, dass** die Schicht Kautschukmischung (14), die der radial innersten Schicht Kautschukmischung (15) radial benachbart ist, eine Dicke (e₁) aufweist, die kleiner oder gleich 1,7 mm ist.

4. Reifen (1) nach einem der vorhergehenden Ansprüche, **dadurch gekennzeichnet, dass** die Stahldrähte eine solche maximale Zugspannung vor Bruch R aufweisen, ausgedrückt in MPa und gemessen nach der Norm ISO 6892 von 1984, dass R ≥ 175 + 930.C - 600.ln(d) und R ≥ 1500 MPa ist, wobei d der Durchmesser der Stahldrähte ist.

5. Reifen (1) nach einem der vorhergehenden Ansprüche, **dadurch gekennzeichnet, dass** die Stahldrähte einen solchen Massenanteil von Chrom Cr aufweisen, dass Cr < 12 % ist.

6. Reifen (1) nach einem der vorhergehenden Ansprüche, **dadurch gekennzeichnet, dass** die metallischen Verstärkungselemente (11) wenigstens einer Schicht der Karkassenbewehrung (2) Metallseile mit Schichten mit einem als Verstärkungselement einer Karkassenbewehrung eines Reifens verwendbaren Aufbau [L+M] oder [L+M+N] sind, die eine erste Lage C1 aus L Drähten mit einem Durchmesser d₁ aufweisen, mit L von 1 bis 4, die von wenigstens einer Zwischenlage C2 aus M Drähten mit einem Durchmesser d₂ umgeben ist, die zusammen spiralförmig mit einer Steigung p₂ gewickelt sind, mit M von 3 bis 12, wobei die Lage C2 eventuell von einer äußeren Lage C3 aus N Drähten mit einem Durchmesser d₃ umgeben ist, die zusammen spiralförmig mit einer Steigung p₃ gewickelt sind, mit N von 8 bis 20.

7. Reifen (1) nach Anspruch 6, **dadurch gekennzeichnet, dass** der Durchmesser der Drähte der ersten Lage (C1) zwischen 0,10 und 0,4 mm liegt, und dadurch, dass der Durchmesser der Drähte der Lagen (C2, C3) zwischen 0,10 und 0,4 mm liegt.

8. Reifen (1) nach einem der vorhergehenden Ansprüche, **dadurch gekennzeichnet, dass** die Scheitelbewehrung (5) von wenigstens zwei Arbeitsscheitelschichten aus Verstärkungselementen gebildet wird, die sich von einer Schicht zur anderen überkreuzen und dabei mit der Umfangsrichtung Winkel zwischen 10° und 45° bilden.

9. Reifen (1) nach einem der vorhergehenden Ansprüche, **dadurch gekennzeichnet, dass** die Scheitelbewehrung (5) außerdem wenigstens eine Schicht von Umfangsverstärkungselementen aufweist.

10. Reifen (1) nach einem der vorhergehenden Ansprüche, **dadurch gekennzeichnet, dass** die Scheitelbewehrung (5) radial außen durch wenigstens eine zusätzliche Lage, Schutzlage genannt, aus sogenannten elastischen Verstärkungselementen ergänzt wird, die bezüglich der Umfangsrichtung unter einem Winkel zwischen 10° und 45° und mit derselben Richtung wie der Winkel ausgerichtet sind, der von den nicht dehnbaren Elementen der Arbeitslage, welche ihr radial benachbart ist, gebildet wird.

11. Reifen (1) nach einem der vorhergehenden Ansprüche, **dadurch gekennzeichnet, dass** die Scheitelbewehrung (5) außerdem eine Triangulationsschicht aufweist, welche von metallischen Verstärkungselementen gebildet wird, die mit der Umfangsrichtung Winkel bilden, die größer als 60° sind.

## Claims

1. Tire (1) having a radial carcass reinforcement (2), consisting of at least one layer of metal reinforcing elements, said tire comprising a crown reinforcement (5), itself capped radially with a tread (6), said tread being joined to two beads (3) via two sidewalls, the metal reinforcing elements (11) of at least one layer of the carcass reinforcement being cords consisting of several steel threads having a weight content of carbon C such that 0.01% ≤ C < 0.4%, the thickness (E) of the rubber compound between the inner surface (10) of the tire cavity (8) and the point (12) of a metal reinforcing element (11) of the carcass reinforcement that is closest to said inner surface of the cavity being less than or equal to 3.2 mm, **characterized in that** said cords of at least one layer of the carcass reinforcement exhibit, in the "permeability" test, described in standard ASTM D2692-98, a flow rate strictly greater than 20 cm³/min

2. Tire (1) according to Claim 1, the rubber compound between the tire cavity (8) and the reinforcing elements (11) of the radially innermost carcass reinforcement layer (2) consisting of at least two layers of rubber compound (14, 15), **characterized in that** the radially innermost layer of rubber compound (15) has a thickness (e₂) less than or equal to 1.5 mm.

3. Tire (1) according to one of Claims 1 and 2, the rubber compound between the tire cavity (8) and the reinforcing elements (11) of the radially innermost carcass reinforcement layer (2) consisting of at least two layers of rubber compound (14, 15), **characterized in that** the layer of rubber compound (14) radially adjacent to the radially innermost layer of rubber compound (15) has a thickness (e₁) less than or equal to 1.7 mm.

4. Tire (1) according to one of the preceding claims, **characterized in that** said steel threads have a maximum tensile strength R, expressed in MPa and measured according to the ISO 6892 standard of 1984, such that R ≥ 175 + 930.C - 600.ln(d) and R ≥ 1500 MPa, d being the diameter of said steel threads.

5. Tire (1) according to one of the preceding claims, **characterized in that** said steel threads have a weight content of chromium Cr such that Cr < 12%.

6. Tire (1) according to one of the preceding claims, **characterized in that** the metal reinforcing elements (11) of at least one layer of the carcass reinforcement (2) are layered metal cords of [L+M] or [L+M+N] construction of use as reinforcing element in a tire carcass reinforcement, comprising a first layer C1 of L threads of diameter d₁, with L ranging from 1 to 4, surrounded by at least one intermediate layer C2 of M threads of diameter d₂ wound together in a helix at a pitch p₂, with M ranging from 3 to 12, said layer C2 possibly being surrounded by an outer layer C3 of N threads of diameter d₃ wound together in a helix at a pitch p₃, with N ranging from 8 to 20.

7. Tire (1) according to Claim 6, **characterized in that** the diameter of the threads of the first layer (C1) is between 0.10 and 0.4 mm, and **in that** the diameter of the threads of the layers (C2, C3) is between 0.10 and 0.4 mm.

8. Tire (1) according to one of the preceding claims, **characterized in that** the crown reinforcement (5) is formed of at least two working crown layers of reinforcing elements that are crossed from one layer to the other and form, with the circumferential direction, angles of between 10° and 45°.

9. Tire (1) according to one of the preceding claims, **characterized in that** the crown reinforcement (5) further comprises at least one layer of circumferential reinforcing elements.

10. Tire (1) according to one of the preceding claims, **characterized in that** the crown reinforcement (5) is supplemented radially on the outside by at least one additional ply, referred to as a protective ply, of reinforcing elements, referred to as elastic reinforcing elements, that are oriented with respect to the circumferential direction at an angle of between 10° and 45° and in the same direction as the angle formed by the inextensible elements of the working ply which is radially adjacent thereto.

11. Tire (1) according to one of the preceding claims, **characterized in that** the crown reinforcement (5) also comprises a triangulation layer formed of metal reinforcing elements that form angles of more than 60° with the circumferential direction.
